Europäisches Patentamt

European Patent Office

Office européen des brevets

(11) Veröffentlichungsnummer: **0 245 869**
**B1**

(12) **EUROPÄISCHE PATENTSCHRIFT**

(45) Veröffentlichungstag der Patentschrift:
**07.02.90**

(21) Anmeldenummer: **87107054.6**

(22) Anmeldetag: **15.05.87**

(51) Int. Cl.⁴: **B29B 7/80**

(54) Vorrichtung zum Vermischen von Mehrkomponentenkunststoffen, insbesondere Polyurethan.

(30) Priorität: **16.05.86 DE 3616600**

(43) Veröffentlichungstag der Anmeldung:
**19.11.87 Patentblatt 87/47**

(45) Bekanntmachung des Hinweises auf die Patenterteilung:
**07.02.90 Patentblatt 90/6**

(84) Benannte Vertragsstaaten:
**BE DE FR GB IT NL SE**

(56) Entgegenhaltungen:
**EP-A- 0 062 182**

(73) Patentinhaber: **ELASTOGRAN POLYURETHANE GMBH,
Landwehrweg, D-2844 Lemförde(DE)**

(72) Erfinder: **Taubenmann, Peter, Strindbergstrasse 1,
D-8000 München(DE)**

(74) Vertreter: **Karau, Wolfgang Dr. et al, BASF
Aktiengesellschaft Carl-Bosch-Strasse 38,
D-6700 Ludwigshafen(DE)**

**Beschreibung**

Die Erfindung betrifft eine Vorrichtung nach dem Oberbegriff des Anspruches 1.

Derartige Vorrichtungen sind zum Beispiel aus der DE-PS 20 65 841, der DE-PS 26 12 812 und der DE-OS 32 08 696 bekannt.

Diese bekannten Vorrichtungen, bei denen es sich um sog. "Hochdruckmischvorrichtungen" handelt, weisen gemeinsam in der Mischkammer angeordnete Drossel- und/oder Beruhigungsorgane auf, die in Strömungsrichtung auf den Eintritt der Komponenten folgend in die Mischkammer hinein und aus dieser heraus bewegbar sind. Diese Organe sollen einmal dafür sorgen, daß ein Stau ensteht, der eine intensive Mischung bedingt. Zum anderen sollen sie beruhigend auf die Austrittsströmung insbesondere dann einwirken, wenn in offene Formen eingefüllt wird. Die Drossel- und Beruhigungsorgane müssen aus der Mischkammer herausbewegbar sein, um die Bewegung eines Reinigungskolbens bis zur Austrittsöffnung nicht zu verhindern. Ein solcher Reinigungskolben ist bei sehr vielen derartigen Hochdruckmischvorrichtungen vorhanden, um die Mischkammer mechanisch zu reinigen.

Diese bekannten Vorrichtungen sind nicht nur verhältnismäßig aufwendig, sondern die durch sie erzielte Beruhigung ist in vielen Fällen nicht Zufriedenstellend.

Der Erfindung liegt daher die Aufgabe zugrunde, eine Vorrichtung der eingangs genannten Art zu schaffen, die mit einfachen baulichen Mitteln für eine gute Beruhigung des austretenden Komponentengemisches, insbesondere beim Füllen in offene Formen, sorgt.

Diese Aufgabe wird durch die kennzeichnenden Merkmale des Anspruches 1 gelöst.

Erfindungsgemäß werden keine Maßnahmen in der Mischkammer selbst getroffen, sondern es wird ein Beruhigungsvorsatz vorgesehen, der auch an vorhandene Mischvorrichtungen angebracht werden kann, bzw. ein Zusatzgerät darstellt. Der Aufbau dieses Beruhigungsvorsatzes ist verhältnismäßig einfach und er kann leicht an dem eigentlichen Mischkopf montiert werden. Die Lamellen mit den zwischen ihnen liegenden Zwischenräumen sorgen für eine Beruhigung des austretenden Komponentengemisches, da sie eine große Oberfläche zur Verfügung stellen, die für eine abbremsende, hohe Wandreibung sorgt. Gleichzeitig wird der Strömungsquerschnitt praktisch nicht reduziert, sondern eher vergrößert, insbesondere im Bereich des Austrittes aus dem Lamellenpaket. Damit wird die Strömungsgeschwindigkeit herab gesetzt. Die Beruhigung wird also durch das Abbremsen des Komponentengemisches durch die hohe Wandreibung und durch die Vergrößerung des Austrittsquerschnittes gefördert.

In vorteilhafter Weise kann die Erfindung so ausgestaltet sein, wie in Anspruch 2 angegeben. Das Führungsgehäuse mit den Stegen, die den Zwischenraum zwischen den Lamellen ausfüllen, sorgt nicht nur für eine sichere Führung der vor- und zurückbewegbaren Lamellen, sodern auch für eine mechanische Reinigung der Lamellen bei ihrem Rückhub.

Die Lamellen können in unterschiedlicher Form ausgebildet sein. Beispielsweise können die Frontkanten abgeschrägt oder abgerundet sein. Sie können auch mehr oder weniger weit in den Komponentengemischstrom hineinbewegbar sein, um so auf das Ausmaß der Beruhigung einzuwirken.

Im folgenden wird die Erfindung unter Hinweis auf die Zeichnung anhand eines Ausführungsbeispieles näher erläutert.

Es zeigt:

Fig. 1 einen schematischen Schnitt durch eine Ausführungsform einer Vorrichtung nach der Erfindung in ihrer Grund- oder Nichtarbeitsstellung;

Fig. 2 einen der Fig. 1 entsprechenden Schnitt, jedoch in Arbeitsstellung, d.h. beim Mischen von Komponenten;

Fig. 3 eine Seitenansicht der Darstellung der Fig. 2; und

Fig. 4 eine Ansicht der Fig. 2 von unten.

Die in der Zeichnung dargestellte Vorrichtung weise einen Mischkopf 10 bekannter Bauart auf. Der hier zeichnerisch angedeutete Mischkopf besitzt eine Mischkammer mit Eintrittsöffnungen für die Kunststoffkomponenten und eine Austrittsöffnung für das Komponentengemisch. In der Mischkammer ist ein Reinigungskolben 11 hin- und herbewegbar, der mit Rücklaufnuten versehen ist, so daß die Komponenten in der Nichtarbeits- oder Reiningungsstellung zurück zum Vorratsbehälter strömen können. Die Austrittsöffnung ist mit 12 bezeichnet.

An dem Mischkopf 10 ist ein Beruhigungsvorsatz 1 angebracht. Dieser Beruhigungsvorsatz trägt eine Anzahl von Lamellen 3, die in einem Führungsgehäuse 5 gelagert, geführt und in diesem hin- und herbewegbar sind. Zwischen den Lamellen 5 liegen Stege 2, die den entsprechenden Zwischen raum zwischen den Lamellen 3 ausfüllen. Die Frontkanten der Lamellen sind mit 6, die Unterkanten mit 7 bezeichnet.

Bewegt werden die Lamellen 3 durch eine hydraulische Kolben- und Zylindereinheit 4. Ein- und Austritt für die hydraulische Steuerflüssigkeit sind mit 8 und 9 bezeichnet.

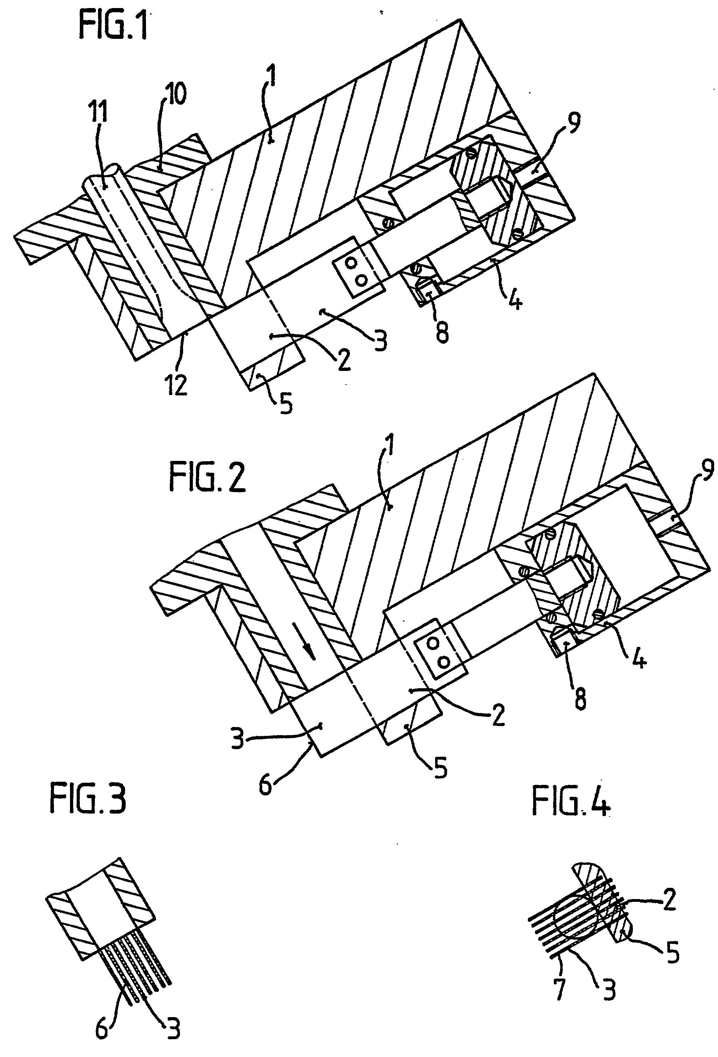

Bevor eine Mischung durchgeführt wird, befindet sich die Vorrichtung in der in Fig. 1 dargestellten Stellung.

Zu Beginn Mischvorganges wird der Reinigungskolben 11 zurückgezogen, so daß die Komponenten in die Mischkammer eintreten können. Gleichzeitig werden die Lamellen mit Hilfe der hydraulischen Kolben-und Zylindereinheit 4 aus der in Fig. 1 gezeigten Stellung bewegt. Das in der Mischkammer hergestellte Komponentengemisch tritt durch die Austrittsöffnung 12 in die Zwischenräume zwischen den Lamellen 3 ein und im Bereich der Frontkanten 6 und der Kanten 7 auf der unterseite aus. Durch die Reibung an den Flächen der Lamellen und durch den größeren Austrittsquerschnitt im Bereich der Kanten 6 und 7 erfolgt eine intensive Beruhigung des Komponentengemisches. Wenn ein Mischvorgang beendet werden soll, wird der Komponentenstrom in die Mischkammer unterbrochen. Dieses kann auch durch den Reinigungskolben 11 geschehen, der in Richtung auf die Austrittsöffnung 12 bewegt wird. Gleichzeitig werden die Lamellen 3 in den Bereich des Führungsgehäuses 5 zurückgezogen. Durch die Stege 2 werden die Lamellen mechanisch gereinigt.

Der Beruhigungsvorsatz 1 kann ohne Schwierigkeiten montiert werden, und zwar nachträglich, d.h. an bereits vorhandene Mischköpfe.

Die Vorrichtung ist absichtlich "schräg" dargestellt, da sie in vorteilhafter Weise im Betrieb so angeordnet werden sollte, damit der Gemischstrom dann senkrecht nach unten praktisch in Richtung der Diagonalen durch die Lamellen aus- und in die Form eintritt.

Selbstverständlich ist die Erfindung nicht auf die dargestellte Form der Lamellen beschränkt. Diese können auch schräg oder abgerundet sein. Die Form der Stege des Führungsgehäuses 5 ist dann entsprechend angepaßt. Auch ist es möglich, die Lamellen durch entsprechende hydraulische Steuerung unterschiedlich weit vorzuschieben, um auch auf diese Weise auf das Ausmaß der Beruhigung einzuwirken.

**Patentansprüche**

1. Vorrichtung zum Vermischen von Mehrkomponentenkunststoffen, insbesondere Polyurethan, mit einer Mischkammer mit Eintrittsöffnungen für die einzelnen Komponenten und einer Austrittsöffnung für das Komponentengemisch, dadurch gekennzeichnet,daß an der Austrittsöffnung (12) ein Beruhigungsvorsatz (1) vorgesehen ist, der mehrere Lamellen (3) aufweist, die in den Bereich des austretenden Komponentengemisches bewegbar sind, und in Strömungsrichtung dieses austretenden Gemisches verlaufen.

2. Vorrichtung nach Anspruch 1, dadurch gekennzeichnet, daß die Lamellen (3) in einem neben der Austrittsöffnung (12) angeordneten Führungsgehäuse (5) bewegbar sind, das den Zwischenraum zwischen den Lamellen ausfüllende Stege (2) aufweist.

3. Vorrichtung nach Anspruch 2, dadurch gekennzeichnet, daß die Vorderkanten der Stege (2) den Frontkanten (6) der Lamellen (3) angepaßt sind.

4. Vorrichtung nach Anspruch 3, dadurch gekennzeichnet, daß die Lamellen (3) durch eine hydraulische Kolben- und Zylindereinheit (4) bewegbar sind.

**Claims**

1. Appartus for mixing multicomponent plastics, in particular polyurethane, having a mixing chamber with inlet orifices for the individual components and an outlet orifice for the mixture of components, wherein the outlet orifice (12) is provided with a steadying attachment (1) which has a plurality of lamellae (3) which can be moved into the region of the emerging mixture of components and run in the direction of flow of this emerging mixture.

2. Apparatus as claimed in claim 1, wherein the lamellae (3) are movable in a guide housing (5) which is arranged adjacent to the outlet orifice (12) and has webs (2) occupying the space between the lamellae.

3. Appaartus as claimed in claim 2, wherein the front edges of the webs (2) adapted to the front edges are of the lamellae (6).

4. Apparatus as claimed in claim 3, wherein the lamellae (3) can be moved by means of a hydraulic piston and cylinder unit (4).

**Revendications**

1. Dispositif pour le mélange de matières plastiques multicomposantes, en particulier polyuréthane, à chambre de mélange munie d'orifices d'entrée pour les différents composants et d'un orifice de sortie pour le mélange de composants, caractérisé par le fait qu'à l'orifice de sortie est prévu un adaptateur de stabilisation qui possède plusieurs lamelles (3) qui sont déplaçables dans la zone de sortie du mélange de composants et qui s'étendent en direction d'écoulement de ce mélange sortant.

2. Dispositif selon la revedication 1, caractérisé par le fait que les lamelles (3) sont mobiles dans un boîtier de guidage (5) disposé au voisinage de l'orifice de sortie (12) et qui présente des barrettes (2) remplissant l'espace compris entre les lamelles.

3. Dispositif selon la revendication 2, caracatérisé par le fait que les arêtes avant des barrettes (2) sont adaptées aux arêtes frontales (6) des lamelles (3).

4. Dispositif selon la revendication 3, caractérisé par le fait que les lamelles (3) sont déplaçables au moyen d'un vérin hydraulique (4).

FIG.1

FIG.2

FIG.3

FIG.4